# EUROPEAN PATENT APPLICATION

(11) **EP 0 642 271 A1**
(43) Date of publication of application: **08.03.1995**
(21) Application number: 94305359.5
(22) Date of filing: 20.07.1994
(51) Int. Cl.: H04N 7/15

(54) **Video communication apparatus**

(30) Priority: 03.09.1993 GB 9318301
(71) Applicant: International Business Machines Corporation, Armonk, N.Y. 10504 (US)
(72) Inventor: Barraclough, Keith Robert, Romsey, Hampshire (GB); Gay, Adrian Charles, Fareham, Hampshire PO15 6LF (GB)
(74) Representative: Davies, Simon Robert

(57) **Abstract**

In a video conference between a number N of parties, each video conferencing terminal produces a respective video signal comprising, in the case of the NTSC standard, sixty fields per second. These are input to an analog multi-point control unit which selects every Nth field from each input video signal and derives therefrom a single output video signal also of sixty fields per second, in which consecutive fields are derived cyclically from each of the N input video signals in turn. The single output video signal is transmitted to each video conferencing terminal, which separates out the fields of the input video signals present in the single output video signal to provide N individual reduced field rate video signals each comprising 60/N fields per second and each having fields derived from a respective one of the input video signals.

## Description

The present invention relates to video communication apparatus.

Video conference users on, say, a wide area network typically use a multipoint control unit to handle the multitude of video signals received from each party to the video conference. The commercially available multipoint control units connect users in a star configuration and accept video from each party to the conference. The multipoint control unit selects one video signal from the incoming signals and transmits the selected video signal to all other parties to the conference. Therefore each party can only display one video signal at any one time. An example of such apparatus is disclosed in US-A 4,710,917.

An object of the present invention is to provide a communication apparatus which can be used to overcome this limitation of the prior art.

Accordingly, the present invention provides a communication apparatus including means for deriving from a plurality of input video signals a single output video signal whose fields are derived cyclically from the fields of the input video signals.

An embodiment of the present invention will now be described, by way of example only, with reference to the accompanying drawings in which:
Figure 1 is a schematic diagram of a video conferencing apparatus embodying the present invention,
Figure 2 illustrates the principle of operation of the AMCU of figure 1,
Figure 3 is a block diagram of the AMCU, and
Figure 4 is a block diagram of the receiver and display of a videoconferencing terminal of figure 1.

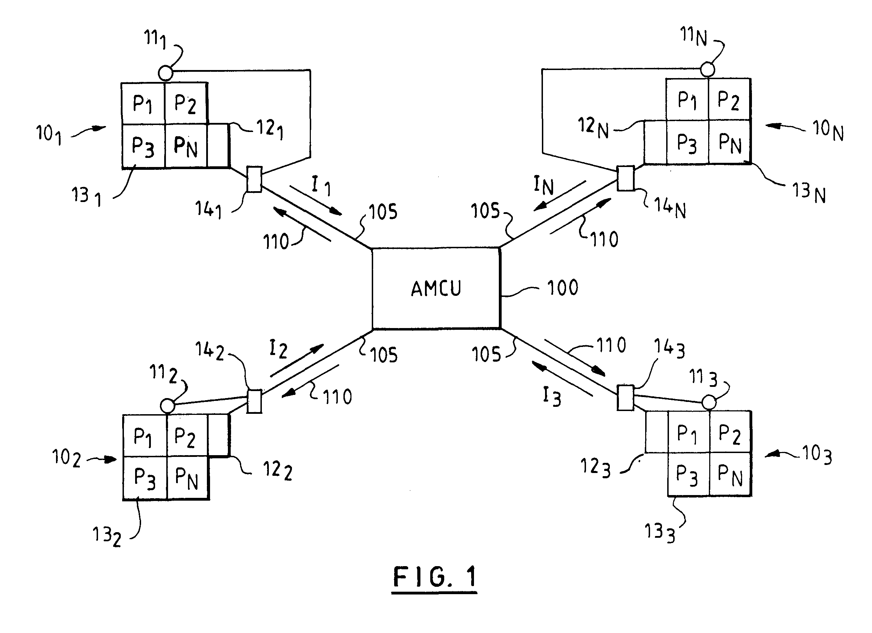

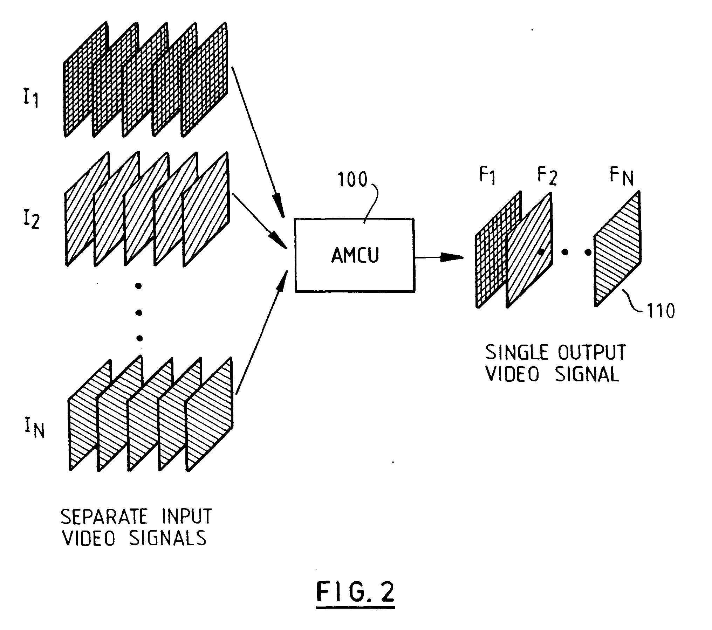

Referring to figures 1 and 2, a video conferencing system for a number N of parties has N mutually remote video conferencing terminals 10₁ to 10_{N}. Each terminal includes a respective video camera 11₁ to 11_{N} for producing a respective video signal I₁ to I_{N}. Each video signal comprises, in the case of the NTSC standard, sixty fields per second. The video signals I₁ to I_{N} are input, via a respective interface unit 14₁ to 14_{N} and coaxial cable 105, to an analog multi-point control unit (AMCU) 100 which selects every Nth field from each input video signal and derives therefrom a single output video signal 110, also of sixty fields per second, in which consecutive fields F₁, F₂,.., F_{N} are derived cyclically from each of the N input video signals in turn.

Each terminal 10₁ to 10_{N} also has a respective video receiver 12₁ to 12_{N}, and the single output video signal 110 from the AMCU 100 is transmitted via the respective cables 105 and the interface unit 14₁ to 14_{N} to each such receiver. Each receiver 12₁ to 12_{N} separates out the fields of the input video signals I₁ to I_{N} present in the single output video signal 110 to provide N individual reduced field rate video signals each comprising 60/N fields per second and each having fields derived from a respective one of the input video signals. Each receiver then displays, on a common display screen 13₁ to 13_{N} at the terminal, a respective picture P₁ to P_{N} corresponding to each input video signal. If desired, each terminal may be designed to separate out and display only the pictures coming from the remote cameras.

For example, where N=4 each reduced field rate video signal will have 15 fields per second for NTSC. However, for the purpose of video conferencing full video motion is not required, and a field rate approximately fifteen fields per second is deemed adequate.

The video signals I₁ to I_{N} are modulated to between 410 MHz and 500 Mhz, using programmable or fixed frequency modulators, up to an appropriate frequency for transmission over the coaxial cable 105. Consequently, the video conferencing system can be implemented using existing in-house cabling used by, for example, a local area network without having an adverse effect on the performance or operation of the local area network.

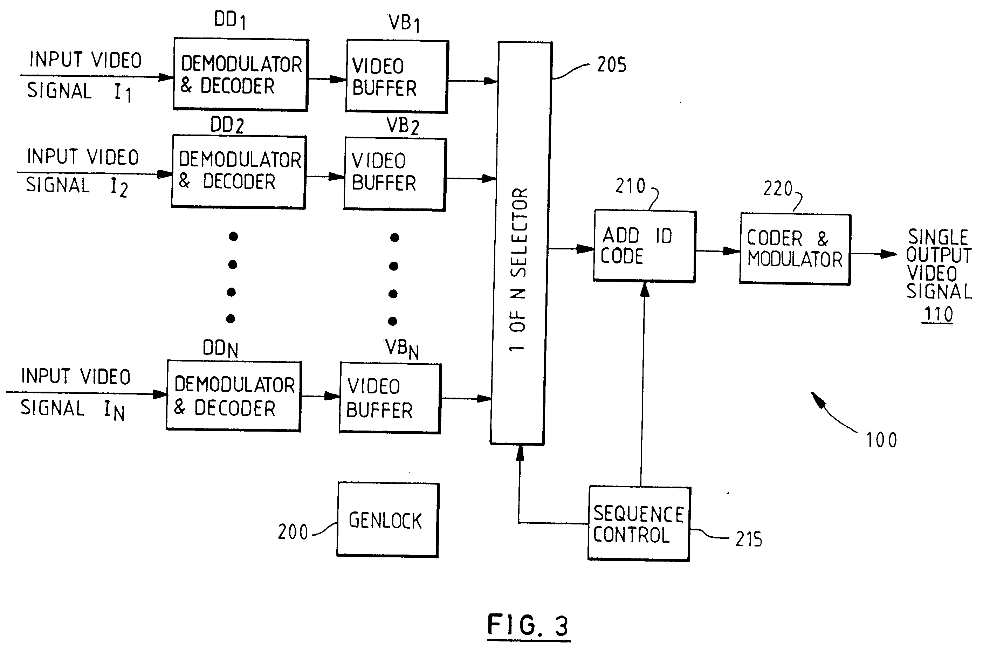

Referring to figure 3, the AMCU 100 comprises a plurality of demodulators and decoders DD₁ to DD_{N} and video field buffers VB₁ to VB_{N}, a genlock 200, a one-of-N selector 205, means 210 for generating an identification code to be associated with each selected video field, a sequence controller 215 and a coder and modulator 220.

The input video signals I₁ to I_{N} in NTSC format are received by the AMCU 100, demodulated and stored in the video field buffers VB₁ to VB_{N}. The one-of-N selector 205 has a plurality of inputs connected respectively to the video field buffers VB₁ to VB_{N}, and a single output. Under the control of the sequence controller 215 the one-of-N selector 205 cyclically connects the inputs individually to the single output thereby selecting video fields for incorporation into the single output video signal 110 in an order determined by the sequence controller 215.

It will be appreciated that the vertical synchronisation pulses of each input video signal may not be synchronised. The genlock 200 synchronises the vertical synchronisation pulses in a conventional manner thereby rendering the input video signals suitable for subsequent interleaving such that the single output video signal 110 conforms to the NTSC format. The genlock 200 ensures that the vertical syncs of the individual input video signals are synchronised prior to the one-of-N selector 205 selecting the next video field.

Field identification codes generated by the coder 210 are used for identifying the source of each video field and are added to the single output video signal 110 during flyback. This enables the use of interleaving or multiplexing sequences other than the sequential interleaving technique described above. An example of such codes are those utilised by the Society for Motion Picture and Television Engineers for editing video.

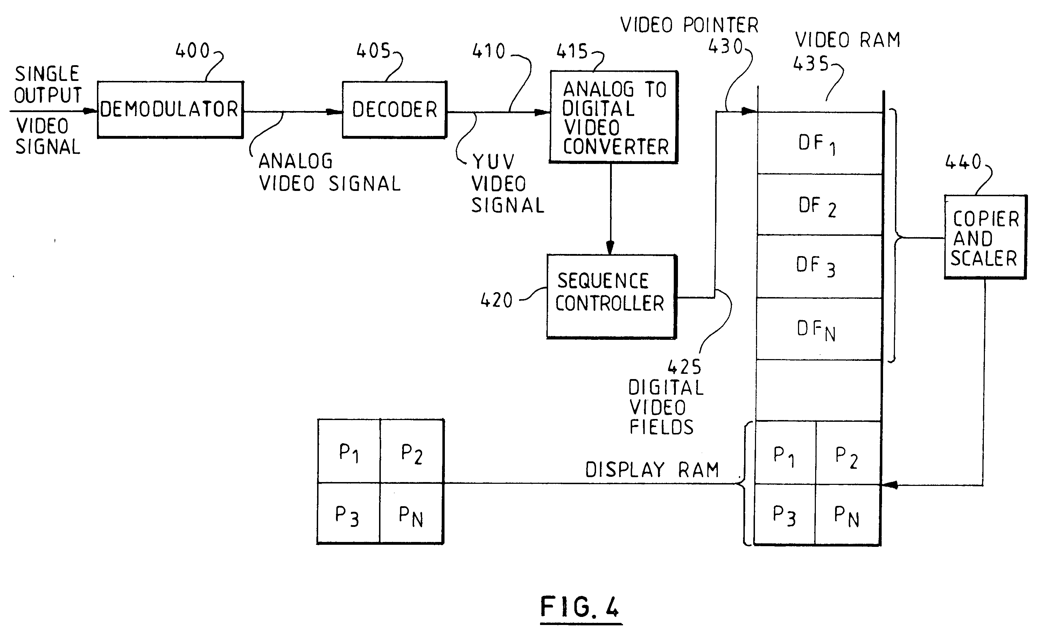

Figure 4 shows schematically one of the video receivers 12₁ to 12_{N} comprising a demodulator 400, a decoder 405, an analog to digital video converter 415, a sequence controller 420, video ram 435, a copier and scaler 440 and a display screen.

The single output video signal 110 is received, via a respective coaxial cable 105, from the AMCU 100 and demodulated to baseband video by the demodulator 400 to produce a baseband single output video signal. The baseband video signal is then decoded by an NTSC decoder 405 to produce, say, a YUV video signal 410 and the field identification codes. Each video field of the YUV video signal is digitised using an analog to digital video converter 415 to produce individual digitised video fields DF₁ to DF_{N}.

A sequence controller 420 places each digitised video field DF₁ to DF_{N} in video RAM 435 at respective addresses indicated by a video pointer 430. The sequence controller 420 can use the field code information to identify the source of the digitised video fields DF₁ to DF_{N} and adjust the video pointer 430 accordingly.

A copier and scaler 440, which manipulates digital images, copies and scales the digitised video fields DF₁ to DF_{N} and transfers them from the video RAM 435 to display RAM to produce pictures P₁ to P_{N} in the display RAM. The pictures P₁ to P_{N} are displayed on the respective displays 13₁ to 13_{N} of each video conferencing terminal 10₁ to 10_{N} in the conventional manner.

The functions of both the sequence controller and the copier and scaler can be implemented using a suitably programmed microprocessor or an existing product such as an IBM ActionMedia II Adapter. Also, the function of the copier and scaler 440 can be performed by having the analog to digital video converter size the digitised video fields and the sequence controller transfer them to the display RAM.

Although the present embodiment uses video modulated at RF, baseband video may be used. This would enable an embodiment of the present invention to be realised without the need for RF modulators or demodulators. Further, the invention may be implemented in TV systems other than NTSC, for example PAL.

Also, the invention is not limited the selection of by the AMCU 100 of one video field in turn from each input video signal. For example, several video fields, contiguous or otherwise, can be taken from the same input video signal, and if desired one could take one or more complete frames (i.e. two identical interlaced fields) from each input signal.

## Claims

1. Communication apparatus including means for deriving from a plurality of input video signals a single output video signal whose fields are derived cyclically from the fields of the input video signals.

2. Communication apparatus as claimed in claim 1, further including a plurality of mutually remote video receivers each having an associated video camera, the input video signals being derived respectively from the video cameras, and each video receiver being capable of separating out the fields derived from, and displaying a picture corresponding to, at least each of the input video signals derived from the remote video cameras.
